# EUROPEAN PATENT SPECIFICATION

(11) **EP 4 215 291 B1**
(45) Date of publication and mention of the grant of the patent: **26.02.2025**
(21) Application number: 21869252.3
(22) Date of filing: 07.09.2021
(51) Int. Cl.: B09B 3/30, C22B 7/00, C22B 15/00, H01M 10/54, B03B 5/00, B03B 7/00, B03B 9/06, B03C 1/30, B09B 3/40, C22B 21/00, H01M 10/0525, B03B 5/12, B03C 1/005, B03C 1/10, B09B 101/16

(54) **METHOD FOR RECOVERING VALUABLE MATERIALS FROM LITHIUM ION SECONDARY BATTERY**
VERFAHREN ZUR RÜCKGEWINNUNG VON WERTSTOFFEN AUS EINER LITHIUMIONENSEKUNDÄRBATTERIE
PROCÉDÉ DE RÉCUPÉRATION DE MATÉRIAUX VALORISABLES À PARTIR D'UNE BATTERIE SECONDAIRE AU LITHIUM-ION

(30) Priority: 16.09.2020 JP 2020155536
(43) Date of publication of application: 26.07.2023
(73) Proprietor: Dowa Eco-System Co., Ltd., Tokyo 101-0021 (JP)
(72) Inventor: NISHIKAWA, Chihiro, Tokyo 101-0021 (JP); HONMA, Yoshihiro, Tokyo 101-0021 (JP); WATANABE, Ryoei, Tokyo 101-0021 (JP); YAMASHITA, Masataka, Tokyo 101-0021 (JP)
(74) Representative: Müller-Boré & Partner Patentanwälte PartG mbB
(86) International application number: PCT/JP2021/032877
(87) International publication number: WO 2022/059565

(56) References cited:
- JP-A- 2015 195 129
- JP-A- 2015 195 129
- JP-A- 2017 037 807
- JP-A- 2020 064 855
- JP-A- 2020 064 855
- JP-A- 2020 143 329
- Journal of the Mining and Metallurgical Institute of Japan, 25 October 1988, vol. 104, no. 1208, pp. 751-753, see in particular, fig. 3, etc.

## Description

### Technical Field

The present invention relates to a method for recovering a valuable substance from, for example, positive electrode current collectors, negative electrode current collectors, and positive electrode active substances of defective products generated in the production process and of lithium ion secondary batteries discarded due to, for example, expired life of both the batteries and the devices in which they are used.

### Background Art

Lithium ion secondary batteries have a lighter weight, a higher capacity, and a higher electromotive force than those of existing lead-acid batteries and NiCd secondary batteries, and are used as secondary batteries of, for example, personal computers, electric vehicles, and portable devices. For example, valuable substances such as cobalt and nickel are used in the positive electrodes of lithium ion secondary batteries in the form of, for example, lithium cobaltate (LiCoO₂) and a ternary system positive electrode material (LiNiₓCo_{y}Mn_{z}O₂ (x+y+z=1)).

Lithium ion secondary batteries are expected to continue to become more widespread in use. Therefore, in terms of resource recycling, it is desirable to recover valuable substances from defective products generated in the production process or from lithium ion secondary batteries discarded due to, for example, expired life of the batteries and of the devices in which they are used. When recovering valuable resources from lithium ion secondary batteries, it is important to recover various metals used in the lithium ion secondary batteries separately from each other, in order to increase the value of the substances recovered.

As techniques for recovering valuable substances from lithium ion secondary batteries, techniques of recovering aluminum and copper from pulverized products of thermally treated products of lithium ion secondary batteries have been proposed. For example, PTL 1 discloses a method of heating lithium ion secondary batteries at a temperature of from 600°C through 1,050°C, pulverizing the resulting product, sieving the obtained pulverized products, and subjecting a pulverized product having a size of from 1.0 mm through 10.0 mm to shape sorting using an airflow, to thereby recover aluminum as a heavy product and copper as a light product. Copper can be recovered as a light product because copper exists in the lithium ion secondary batteries in the form of copper foils. It is possible to obtain the pulverized product having a size of from 1.0 mm through 10.0 mm by performing a step of removing a product having a size less than 1.0 mm and a product having a size greater than 10.0 mm from all the pulverized products obtained by pulverization. PTL 2 discloses a method for recovering valuables from a lithium ion secondary battery, which can recover valuables from a positive electrode collector, a negative electrode collector, a positive electrode active material, of a lithium ion secondary battery that is discarded due to defective products generated during the manufacturing process, equipment used, or the end of the life of the battery. Further, PTL 3 discloses a method for separating and recovering electrode materials used in lithium ion batteries, and more particularly a treatment method for effectively separating and recovering positive and negative electrode current collectors of lithium ion batteries and active materials applied to the current collectors according to their materials.

### Citation List

### Patent Literature

PTL 1: JP 6378502 B2
PTL 2: JP 2020 064855 A
PTL 3: JP 2015 195129 A

### Summary of Invention

### Technical Problem

When lithium ion secondary batteries are thermally treated and then pulverized and classified, metals derived from exterior containers and exterior components, such as iron and aluminum, and metals derived from current collectors, such as copper are recovered into a coarse-grained product obtained through the classification. Cobalt and nickel are concentrated in a fine-grained product.

Meanwhile, aluminum derived from aluminum foils of positive electrode current collectors is also contained in the coarse-grained product. According to the method of PTL 1, a certain amount of this aluminum (which is considered to exist mainly in the form of aluminum oxide) is also recovered into the light product that mainly contains copper and is obtained by subjecting the pulverized product having a size of from 1.0 mm through 10.0 mm to shape sorting. Therefore, the copper grade in the light product is low. Moreover, the shape sorting of PTL 1 is a dry process. Soluble components (e.g., fluorine and lithium, which are representative elements contained in electrolytes), if any, are recovered into the light product. Therefore, an extraction process using water is also necessary to separate these soluble components, and this increases the number of steps involved.

Furthermore, shape sorting, which uses an airflow and imposes almost no physical force on the pulverized product, has been achieving a poor performance in separating carbon (which is contained as, for example, a negative electrode active substance of the lithium ion secondary batteries) and copper from each other.

Under these effects, the method of PTL 1 has been having difficulty separating and recovering copper that satisfies the qualities required for being recycled. Here, "copper that satisfies the qualities required for being recycled" represents copper that has, for example, a copper grade of 90% or higher (which means that the content percentage of copper is 90% or higher, the same applies to the "grades" of other elements hereinafter), an aluminum grade of 1% or lower, a carbon grade of 5% or lower, and a fluorine grade of 0.2% or lower.

In addition to the technique described in PTL 1, use of, for example, eddy current sorting has also been known in order to separate and recover copper and aluminum that are contained in the coarse-grained product obtained by thermally treating, pulverizing, and classifying lithium ion secondary batteries. However, both of these methods have been unable to separate and recover copper that satisfies the qualities required for being recycled (e.g., a copper grade of 90% or higher, an aluminum grade of 1% or lower, a carbon grade of 5% or lower, and a fluorine grade of 0.2% or lower). Moreover, as a result of studies into effects that fluorine and carbon have on recovered products of copper in addition to the bad effect of reducing the copper grade, the present inventors have found it important to separate carbon and fluorine because carbon causes problems such as dust generation during recycling of copper and fluorine gives a load on exhaust gas processing during recycling of copper as a smelted material.

The present invention is based on the finding described above, and aims for solving the above-described various problems in the related art and achieving an object described below. That is, it is an object of the present invention to provide a method that can recover copper from lithium ion secondary batteries containing aluminum, carbon, and copper foils as the constituting materials through a small number of steps at a high grade, and a low aluminum grade, a low fluorine grade, and a low carbon grade.

### Solution to Problem

Means for solving the above problems is a method for recovering a valuable substance from a lithium ion secondary battery as set out in the appended claims.

### Advantageous Effects of Invention

According to the present invention, it is possible to solve the various problems in the related art and to recover copper at a high copper grade, and at a low aluminum grade, a low fluorine grade, and a low carbon grade when recovering a valuable substance from a lithium ion secondary battery.

### Brief Description of Drawings

[FIG. 1A] FIG. 1A is a concept diagram illustrating an example of a state when a coarse-grained product is sorted in a liquid using a sorting unit in a wet sorting step;
[FIG. 1B] FIG. 1B is a concept diagram illustrating an example of a state after non-magnetically attractable materials are sorted in a liquid using a sorting unit in a wet sorting step; [FIG. 2] FIG. 2 is a flowchart indicating a method for recovering a valuable substance of the present invention; and [FIG. 3] FIG. 3 is a captured image representing an appearance of a wet jig sorter used in Example 1.

### Description of Embodiments

### (Method for recovering valuable substance)

A method for recovering a valuable substance of the present invention includes a thermal treatment step and a wet sorting step, preferably includes at least one selected from a classifying step, a pulverizing step, and a magnetic force sorting step, and further includes other steps as needed.

The method for recovering a valuable substance of the present invention is based on the present inventors' following finding. According to the existing technique, when thermally treating lithium ion secondary batteries (LIB) and recovering valuable substances such as copper from the lithium ion secondary batteries, there is a case where it is impossible to separate the valuable substances from fluorine and carbon with high accuracy, and the grades of the valuable substances sorted are not sufficient.

More specifically, as described above, the existing technique recovers copper and aluminum from lithium ion secondary batteries by obtaining a light product and a heavy product by shape sorting (specific gravity sorting) using an airflow. However, because being a dry sorting method, shape sorting (specific gravity sorting) using an airflow cannot separate components soluble in a liquid (e.g., fluorine) from the light product, and cannot easily separate carbon adhering to copper from copper, either. As can be seen, the present inventors have found the above-described existing technique problematic not only in that the copper grade in the light product is low, but also in that carbon causes, for example, dust generation during recycling of copper and fluorine is a load on exhaust gas processing during recycling of copper as a smelted material.

That is, the present inventors have found that the above-described existing technique cannot recover a valuable substance that satisfies the qualities required for recycling of lithium ion secondary batteries (when the valuable substance is copper, the required qualities include a copper grade of 90% or higher, a carbon grade of 5% or lower, and a fluorine grade of 0.2% or lower), and cannot sort and recover a valuable substance that can be suitably used for recycling as a raw material for the material to be smelted.

In addition to the above-described existing technique employing shape sorting (specific gravity sorting) using an airflow, for example, there is also a technique of performing eddy current sorting, in order to separate and recover copper and aluminum that are contained in a coarse-grained product. However, the present inventors have found that eddy current sorting, which is a dry sorting method, cannot sufficiently separate and sort copper from, for example, aluminum, fluorine, and carbon, and cannot recover copper that satisfies the qualities required for recycling of lithium ion secondary batteries (the required qualities include a copper grade of 90% or higher, a carbon grade of 5% or lower, and a fluorine grade of 0.2% or lower).

The present inventors have conceived the present invention through earnest studies into a method for recovering a valuable substance, the method being able to highly accurately separate fluorine and carbon from a valuable substance contained in lithium ion secondary batteries, and to sort copper at a high grade.

That is, the present invention is intended to recover copper at a high grade and at a low aluminum grade, a low fluorine grade, and a low carbon grade from valuable substances contained in a lithium ion secondary battery, by including, for example, a thermal treatment step of thermally treating a lithium ion secondary battery containing aluminum, carbon, and a copper foil, and a wet sorting step of applying an external force to a thermally treated product of the lithium ion secondary battery obtained in the thermal treatment step in the presence of a liquid, to thereby sort the thermally treated product into a heavy product and a light product mainly containing copper.

Here, the method for recovering a valuable substance from a lithium ion secondary battery of the present invention thermally treats a lithium ion secondary battery containing valuable substances first (thermal treatment step). Then, the method applies an external force to the thermally treated product of the lithium ion secondary battery obtained in the thermal treatment step in the presence of a liquid, to thereby sort the thermally treated product into a heavy product and a light product containing copper (wet sorting step). In other words, in the present invention, by application (imposition) of an external force to a coarse-grained product in the presence of a liquid, the coarse-grained product is sorted based on specific gravity or shape, to obtain a heavy product and a light product containing copper. For example, the light product mainly contains copper.

Hence, in the present invention, a coarse-grained product is sorted by a wet process using a liquid in the wet sorting step. Therefore, liquid-soluble substances contained in the coarse-grained product, such as fluorine and lithium, can be separated into the liquid (for example, the substances can be leached into the liquid and separated into the post-process liquid (shaking liquid)). As a result, it is possible to reduce the content (grade) of fluorine in the heavy product and the light product that are to be separated from each other. More specifically, for example, it is possible to reduce the content (grade) of fluorine in copper recovered as the light product, and to sort and recover high-grade copper.

Moreover, in the present invention, an external force is applied to the thermally treated product in the presence of a liquid, to sort the thermally treated product in the wet sorting step. Under application of the external force, the thermally treated product is dispersed in the liquid, and the coarse-grained product is sorted based on specific gravity and shape. For example, foil-shaped copper derived from the current collectors of the lithium ion secondary battery is sorted as a light product, and aluminum and iron that are derived from an external container are sorted as a heavy product.

In the present invention, when friction or an impact is applied between different parts of the thermally treated product in response to application of the external force to the thermally treated product in the wet sorting step, for example, fine particles of carbon adhering to the valuable substances contained in the thermally treated product are peeled and separated from the valuable substances. The carbon particles peeled from the valuable substances are, for example, separated together with the liquid (or separated together with the post-process liquid (shaking liquid)). When friction or an impact is applied to the thermally treated product in response to application of the external force in the wet sorting step, for example, fine aluminum oxide derived from the positive electrode current collector of the lithium ion secondary battery is more finely grained. Therefore, the fine aluminum oxide can be separated together with the liquid.

In addition, in the present invention, because the thermally treated product is sorted by a wet process using a liquid, carbon adhering to the valuable substances contained in the thermally treated product can be inhibited from adsorbing to the valuable substances due to adherent moisture or due to an electrostatic force. Hence, it is possible to separate carbon from the valuable substances more easily and to improve the accuracy of sorting between the valuable substances and carbon better than when shape sorting (specific gravity sorting) using an airflow or eddy current sorting is employed.

Hence, by including the thermal treatment step and the wet sorting step specified above, the method for recovering a valuable substance from a lithium ion secondary battery of the present invention can highly accurately separate copper contained in the lithium ion secondary battery from fluorine and carbon, and can recover copper at a high grade. According to the present invention, the method can sort and recover the light product obtained in the wet sorting step at a high grade, as represented by a copper grade of 90% or higher, a carbon grade of 5% or lower, and a fluorine grade of 0.2% or lower.

In the following description, the details of, for example, the steps of the method for recovering a valuable substance from a lithium ion secondary battery of the present invention will be described.

### <Thermal treatment step>

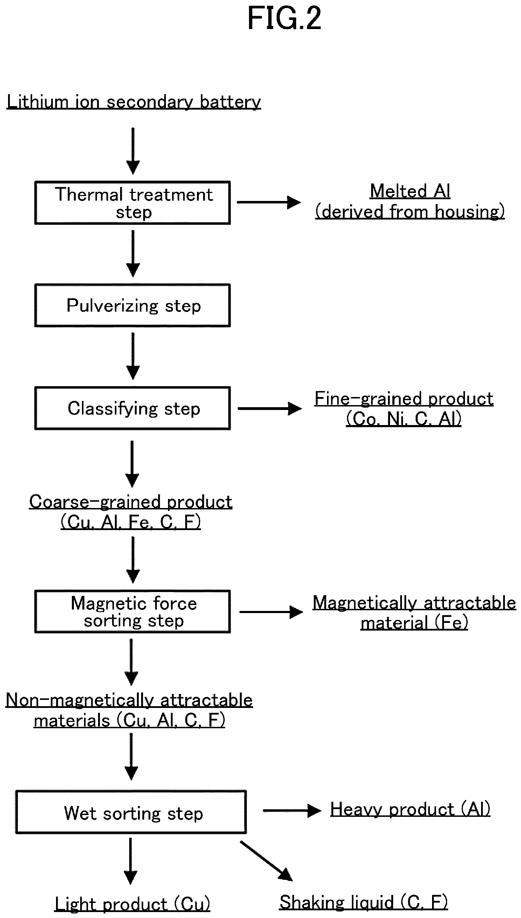

As illustrated in FIG. 2, a lithium ion secondary battery containing aluminum, carbon, and a copper foil as the constituting materials is subjected to the thermal treatment step, to obtain a thermally treated product. In other words, in the thermal treatment step, a lithium ion secondary battery is thermally treated, to obtain a thermally treated product of the lithium ion secondary battery.

### <<Valuable substance>>

A valuable substance contained in a lithium ion secondary battery represents a substance that can suffice as a transaction object without being discarded. Examples of the valuable substance include a carbon (C) concentrate having a high-grade, copper (Cu), aluminum (Al), lithium (Li), cobalt (Co), and nickel (Ni). A carbon (C) concentrate having a high grade (e.g., a grade of 80% or higher) can be suitably used as, for example, a reductant in smelting of metals.

In the present invention, for example, it is possible to sort and recover aluminum as a heavy product obtained in the wet sorting step, and to sort and recover copper as a light product obtained in the wet sorting step. In the present invention, as described above, it is possible to sort and recover copper, which is recovered as the light product, at a high grade represented by a copper grade of 90% or higher, a carbon grade of 5% or lower, and a fluorine grade of 0.2% or lower.

### -Lithium ion secondary battery-

For example, a lithium ion secondary battery is a secondary battery that is charged or discharged through migration of lithium ions between a positive electrode and a negative electrode. Examples of the lithium ion secondary battery include a lithium ion secondary battery including a positive electrode, a negative electrode, a separator, an electrolytic solution containing an electrolyte and an organic solvent, and an exterior container (typically formed of aluminum or iron), which is a battery case in which the positive electrode, the negative electrode, the separator, and the electrolytic solution are stored. The lithium ion secondary battery that is the target of the present invention may be one from which, for example, a positive electrode or a negative electrode is lost.

For example, the shape, structure, and size of the lithium ion secondary battery that can be the target from which to recover a valuable substance in the present invention are not particularly limited. Examples of the shape of the lithium ion secondary battery include a laminate shape, a cylindrical shape, a button shape, a coin shape, a square shape, and a flat shape.

The form of the lithium ion secondary battery is not particularly limited and may be appropriately selected in accordance with the intended purpose. Examples of the form of the lithium ion secondary battery include a battery cell, a battery module, and a battery pack. A battery module represents a product including a plurality of battery cells, which are unit cells, in one housing in a connected state. A battery pack represents a product including a plurality of battery modules in one housing. A battery pack may be equipped with, for example, a controller or a cooling device.

### --Positive electrode--

The positive electrode is a structure including a positive electrode material on a positive electrode current collector. Example of the shape of the positive electrode include a flat plate shape.

For example, the shape, structure, and size of the positive electrode current collector are not particularly limited. Examples of the structure of the positive electrode current collector include a multilayer structure (laminate). Examples of the shape of the positive electrode current collector include a foil shape. Examples of the material of the positive electrode current collector include stainless steel, nickel, aluminum, copper, titanium, and tantalum. Among these materials, aluminum is preferable. Aluminum is widely used because aluminum cannot be doped with lithium ions, and in terms of, for example, costs and conductivity. Aluminum alloys obtained by adding other metals (e.g., silicon and manganese) to aluminum in order to impart a desired property to aluminum are also used. The lithium ion secondary battery that can be the target from which to recover a valuable substance in the present invention thus contains aluminum as the positive electrode current collector.

For example, the positive electrode material contains at least a positive electrode active substance containing a rare valuable substance, and contains a conducting agent and a binder resin as needed. The rare valuable substance is not particularly limited. The target to be recovered by the method for recovering a valuable substance of the present invention is preferably either or both of cobalt and nickel because cobalt and nickel are expensive.

Examples of the positive electrode active substance include lithium manganate (LiMn₂O₄) referred to as an LMO system, lithium cobaltate (LiCoO₂) referred to as an LCO system, LiNiₓCo_{y}Mn_{z}O₂ (x+y+z=1) referred to as a ternary system and an NCM system, LiNiₓCo_{y}Al_{z} (x+y+z=1) referred to as an NCA system, lithium iron phosphate (LiFePO₄), lithium cobalt-nickelate (LiCo_{1/2}Ni_{1/2}O₂), and lithium titanate (Li₂TiO₃). As the positive electrode active substance, these materials may be used in combination.

Examples of the conducting agent include carbon black, graphite, carbon fiber, and metal carbides.

Examples of the binder resin include homopolymers or copolymers of, for example, vinylidene fluoride, tetrafluoroethylene, acrylonitrile, and ethylene oxide, and styrene-butadiene rubbers.

### --Negative electrode--

The negative electrode is a structure including a negative electrode material on a negative electrode current collector. Example of the shape of the negative electrode include a flat plate shape.

For example, the structure and size of the negative electrode current collector are not particularly limited. Copper is widely used as the material of the negative electrode current collector because copper cannot be doped with lithium ions, and in terms of, for example, costs and conductivity. Copper alloys obtained by adding other metals to copper in order to impart a desired property to copper are also used. A widely used shape of the negative electrode current collector is a foil shape. For example, the lithium ion secondary battery that can be the target from which to recover a valuable substance in the present invention thus contains a copper foil as the negative electrode current collector. When the copper foil is formed of a copper alloy, the copper alloy is obtained as a light product in the wet sorting step described below. There is a case where it is necessary to separate the alloy into, for example, copper and other metal components. Hence, a lithium ion secondary battery that contains a copper foil formed of copper as the negative electrode current collector is suitable as the target from which to recover a valuable substance in the present invention. Here, "copper foil" as used in the present specification also comprehends foils of copper alloys (Cu≥70%). The thickness of the foil is preferably from 1 µm through 100 µm.

For example, the negative electrode material contains at least a negative electrode active substance, and contains a conducting agent and a binder resin as needed. As the negative electrode active substance, for example, carbon materials such as graphite and hard carbon, titanate, silicon, and composite materials of each of these materials are widely used in terms of capacity and costs. A lithium ion secondary battery that is preferable as the target from which to recover substances in the present invention is one that contains as the negative electrode active substance, carbon among these materials.

In general, the positive electrode current collector and the negative electrode current collector have a laminate structure.

The material of the exterior container (housing) of the lithium ion secondary battery is not particularly limited. Examples of the material of the exterior container include aluminum, iron, stainless steel, and resins (plastics).

### <<Thermal treatment method>>

The method for performing the thermal treatment (heating) in the thermal treatment step is not particularly limited and may be appropriately selected in accordance with the intended purpose, so long as the method can bring each constituting component of the lithium ion secondary battery into a state from which a valuable substance can be recovered in the classifying step and the wet sorting step described below. In the present invention, it is preferable to thermally treat the lithium ion secondary battery in a manner that the lithium ion secondary battery can be suitably pulverized in the pulverizing step described below.

The thermal treatment step can be suitably performed using, for example, a thermal treatment furnace (roasting furnace). Examples of the thermal treatment furnace include batch-type furnaces such as a rotary kiln, a fluidized bed furnace, a tunnel furnace, and a muffle furnace, a cupola, a stoker furnace, and a fixed bed furnace.

The temperature (thermal treatment temperature) during the thermal treatment is preferably higher than or equal to the melting point of the current collector, of which constituting metal has the lower melting point, of the positive electrode current collector and the negative electrode current collector of the lithium ion secondary battery (i.e., the melting point of aluminum constituting the positive electrode current collector) and lower than the melting point of the current collector, of which constituting metal has the higher melting point (i.e., copper or a copper alloy constituting the negative electrode current collector). More specifically, the thermal treatment temperature is preferably 660°C or higher and 1,100°C or lower, and particularly preferably 700°C or higher and 900°C or lower. When the thermal treatment temperature is lower than 660°C, it tends to be difficult to thermally treat the current collector (aluminum) having the lower melting point sufficiently and bring it into a state easy to recover. When the thermal treatment temperature is higher than 1,100°C, it becomes difficult to inhibit embrittlement of copper (or a copper alloy), which is the current collector having the higher melting point, and it may be difficult to separate copper or a copper alloy from concentrates of cobalt and nickel even when pulverization and classification are performed.

The thermal treatment temperature represents the temperature of the lithium ion secondary battery during the thermal treatment. It is possible to measure the thermal treatment temperature by inserting a thermometer such as a thermocouple or a thermistor into the lithium ion secondary battery at the thermal treatment temperature.

When the exterior container of the lithium ion secondary battery is mainly formed of aluminum and this aluminum melts during the thermal treatment, it is easy to separate this aluminum from the thermally treated product as a melted metal (aluminum) derived from the exterior container, by disposing a receptacle into which to recover the melted metal under the lithium ion secondary battery.

For example, when a laminate including an aluminum foil as the positive electrode current collector and a copper foil as the negative electrode current collector is thermally treated at the predetermined thermal treatment temperature specified above, the positive electrode current collector formed of the aluminum foil is embrittled, and can be finely grained easily in the pulverizing step described below. The embrittlement of the positive electrode current collector occurs through a melting or oxidization reaction. Aluminum that has melted and flowed down is recovered into the receptacle. On the other hand, the negative electrode current collector formed of copper does not melt because it is thermally treated at a temperature lower than the melting point of copper, and can be separated as a coarse-grained product from concentrates (fine-grained products) of cobalt and nickel when the classifying step described below is performed.

The thermal treatment time is not particularly limited, may be appropriately selected in accordance with the intended purpose, and for example, is preferably 1 minute or longer and 5 hours or shorter, more preferably 1 minute or longer and 2 hours or shorter, and particularly preferably 1 minute or longer and 1 hour or shorter. When the thermal treatment time is in the particularly preferable range, there is an advantage in terms of costs taken for the thermal treatment. The thermal treatment time here does not include a retention time (temperature elevation stage).

The atmosphere used for the thermal treatment is not particularly limited and may be appropriately selected in accordance with the intended purpose. For example, the thermal treatment can be performed in the air or a (hypoxic) atmosphere in which the oxygen concentration is low. An atmosphere in which the oxygen concentration is low is preferable because it is possible to recover the metal derived from the positive electrode current collector and the metal derived from the negative electrode current collector at high grades at high recovery rates.

When a material having a melting point lower than the thermal treatment temperature is used in the exterior container of the lithium ion secondary battery, it is preferable to thermally treat the lithium ion secondary battery in a hypoxic atmosphere in which the oxygen concentration is 11 vol% or lower, or in a state in which the oxygen concentration is 11 vol% or lower at least in the lithium ion secondary battery being roasted (particularly, the positive electrode current collector and the negative electrode current collector disposed inside the exterior container of the lithium ion secondary battery).

It is possible to realize the hypoxic atmosphere, by, for example, performing the thermal treatment while storing the lithium ion secondary battery, the positive electrode, or the negative electrode in an oxygen shielding container.

The material of the oxygen shielding container is not particularly limited and may be appropriately selected in accordance with the intended purpose so long as it is a material having a melting point higher than or equal to the thermal treatment temperature. For example, when the thermal treatment temperature is 800°C, examples of the material of the oxygen shielding container include iron and stainless steel that have a melting point higher than this thermal treatment temperature.

When a lithium ion secondary battery is thermally treated while being stored in an oxygen shielding container as described above, the positive electrode current collector containing aluminum is embrittled, and can be finely grained easily in the pulverizing step described below. On the other hand, the negative electrode current collector formed of copper is not embrittled by oxidization, because it is thermally treated in a state in which the oxygen partial pressure is low because of the oxygen shielding effect of the oxygen shielding container and the reducing effect of a negative electrode active substance such as carbon contained in the lithium ion secondary battery.

Hence, the positive electrode current collector is finely pulverized through pulverization in the pulverizing step, whereas the negative electrode current collector exists in the form of a relatively large foil even after pulverization. This also enables more effective and higher-level sorting when performing the classifying step described below.

It is preferable to form an opening in the oxygen shielding container in order to release gas pressure due to combustion of the electrolytic solution in the lithium ion secondary battery. For example, the shape, size, and the forming position of the opening are not particularly limited and may be appropriately selected in accordance with the intended purpose. It is preferable to form the opening to have an opening area less than or equal to 12.5%, more preferably 6.3% of the surface area of the exterior container in which the opening is formed. When the opening area of the opening is greater than 12.5% of the surface area of the exterior container, most parts of the current collectors are easily oxidized by the thermal treatment.

### <Pulverizing step>

In the present invention, it is possible to perform a pulverizing step of pulverizing the thermally treated product obtained in the thermal treatment step. A pulverized product obtained in the pulverizing step may be subjected to the classifying step described below.

The pulverization is not particularly limited and may be appropriately selected in accordance with the intended purpose so long as it is a step of pulverizing the thermally treated product (roasted product) to obtain a pulverized product. It is preferable to obtain a pulverized product by pulverizing the thermally treated product by an impact. For example, it is more preferable to perform a preparatory pulverization, in which the thermally treated product is cut with a cutting device, before applying an impact to the thermally treated product, when there is a condition of not melting the housing of the lithium ion secondary battery in the thermal treatment step.

Examples of the pulverization method by an impact include a method of throwing the thermally treated product using a rotating beating board and slamming the thermally treated product against an impact board to apply an impact, and a method of beating the thermally treated product using a rotating beater. These methods can be performed with, for example, a hammer crusher, a chain mill, and an endmill. The pulverization method by an impact may also be a method of beating the thermally treated product using a ball or rod formed of, for example, ceramic or iron. These methods can be performed with a ball mill and a rod mill. Examples of the pulverization method other than those using an impact include a pulverization method using, for example, a biaxial crusher configured to perform pulverization by compression and having a short width of cut and a short blade length.

When the thermally treated product of the lithium ion secondary battery is pulverized by an impact, the active substances and the current collectors are suitably separated into individual bodies. The active substances are particles having a size of some tens of nanometers initially, and the current collectors have a foil shape. Hence, the active substances break apart preferentially by the pulverization by an impact, and can be separated in the next classifying step as a result.

The pulverization time in the pulverizing step is not particularly limited and may be appropriately selected in accordance with the intended purpose. The pulverization time per 1 kg of a lithium ion secondary battery is preferably 1 second or longer and 30 minutes or shorter, more preferably 2 seconds or longer and 10 minutes or shorter, and particularly preferably 3 seconds or longer and 5 minutes or shorter. When the pulverization time is shorter than 1 second, pulverization may fail. When the pulverization time is longer than 30 minutes, excessive pulverization may occur, and copper derived from the negative electrode current collector may be recovered into the fine-grained product in the next classifying step.

The pulverization conditions in the pulverizing step are as follows. For example, for pulverization using an impact type or beating type pulverizer such as a chain mill or a hammer mill, it is preferable to set the tip speed of the chain or the hammer to 10 m/sec or higher and 300 m/sec or lower, and to set the residence time of the target in the pulverizer to 1 second or longer and 10 minutes or shorter. In the method for recovering a valuable resource of the present invention, these conditions make it possible to pulverize copper and aluminum, which are positive electrode materials, and members formed of Fe derived from the housing without excessively minutely pulverizing them.

### <Classifying step>

Next, the thermally treated product obtained in the thermal treatment step or the pulverized product obtained in the pulverizing step may be subjected to a classifying step of classifying the thermally treated product or the pulverized product into a coarse-grained product and a fine-grained product. The classifying method is not particularly limited and may be appropriately selected in accordance with the intended purpose. The classification may be performed using, for example, a vibrating sieve, a multi-stage vibrating sieve, a JIS Z8801 standard sieve, and a dry or wet cyclone.

Aluminum (Al) exists in the form of relatively large lumps derived from the housing, foil-shaped aluminum (aluminum foil) derived from the positive electrode current collector, and fine shapes produced by pulverizing the foil-shaped aluminum. Hence, aluminum is contained in both of the coarse-grained product and the fine-grained product.

The classification point in the classifying step used in the present invention is preferably from 0.6 mm through 2.4 mm and particularly preferably from 1.0 mm through 2.0 mm. When the classification point is greater than 2.4 mm, the recovery rate of copper into the coarse-grained product may be low. On the other hand, when the classification point is less than 0.6 mm, mixing of a metal derived from a current collector containing a metal having a low melting point, and of the active substances of the electrodes into the coarse-grained product may increase, the grade of a metal (copper or a copper alloy) derived from a current collector and having a high melting point is low in the coarse-grained product, and the recovery rates of cobalt and nickel derived from the positive electrode active substance into the fine-grained product may be low. In terms of appropriate separation of each valuable substance, the classification point is preferably from 1.0 mm through 2.0 mm.

Through this classification, it is possible to separate and recover metals derived from the exterior container and a metal derived from a current collector and having a high melting point (i.e., copper) as the coarse-grained product, and to separate and recover the positive electrode active substances such as cobalt and nickel and the negative electrode active substances such as carbon as the fine-grained product, respectively. However, at this stage, carbon (generally in the form of particles) and fluorine often remain in the coarse-grained product. Moreover, the components derived from the positive electrode active substances, such as cobalt, nickel, and manganese, may be entangled into the coarse-grained product during, for example, pulverization and may be recovered as the coarse-grained product. Furthermore, there may be a case where aluminum that is derived from the exterior container, and has adhered to any other components of the lithium ion after being melted during the thermal treatment and failed to be separated, and aluminum that is derived from the exterior container, and has been melted insufficiently during the thermal treatment are recovered as the coarse-grained product. For example, these substances can be separated in the wet sorting step described below.

The coarse-grained product recovered in the classifying step may be classified at a classification point greater than 2.4 mm and a product (medium product) recovered to the fine-grained product side of this classification point may be subjected to the magnetic force sorting step described below. Through another classification of the coarse-grained product, it is possible to recover high-grade copper into the coarse-grained product to be recovered through this another classification. By subjecting the coarse-grained product recovered through this another classification to physical sorting (e.g., magnetic force sorting and specific gravity sorting), which may be a dry process or a wet process, it is possible to recover a product in which the copper grade is further increased.

The fine-grained product sorted in the classifying step contains, for example, cobalt, nickel, lithium, and aluminum derived from the positive electrode current collector. It is optional to subject this fine-grained product to a physical sorting step or a wet purifying step, to recover concentrates of cobalt, nickel, and lithium from the fine-grained product (through this, it is possible to separate carbon from, for example, cobalt).

Classification (sieving) of the coarse-grained oversize product (oversize product) and the fine-grained product (undersize product) may be repeated a plurality of times. Through this repetitive classification, it is possible to further reduce the impurity grade in each product.

The pulverizing step and the classifying step may be performed simultaneously. For example, the pulverizing step and the classifying step may be performed as a pulverizing/classifying step (pulverization and classification) of pulverizing a thermally treated product obtained in the thermal treatment step while classifying an obtained pulverized product into a coarse-grained product and a fine-grained product.

### <Magnetic force sorting step>

As described above, it is preferable that the method for recovering a valuable substance of the present invention further includes a magnetic force sorting step of sorting the thermally treated product obtained in the thermal treatment step or the coarse-grained product obtained at the coarse side in the classifying step by a magnetic force into magnetically attractable materials and non-magnetically attractable materials. In this case, iron is separated into magnetically attractable materials as a magnetically attractable material and non-magnetically attractable materials mainly containing copper and aluminum (the coarse-grained product from which magnetically attractable materials are removed) can be recovered as non-magnetically attractable materials. In the following description, sorting by a magnetic force may be referred to as "magnetic force sorting" or "magnetic sorting".

The magnetic force sorter is not particularly limited and may be appropriately selected in accordance with the intended purpose. Examples of the magnetic force sorter include a bar magnet, a lattice magnet, a rotary magnet, a magnet strainer, a high magnetic force pulley (magnet pulley) magnetic sorter, a drum-shaped magnetic sorter, and a suspended magnetic sorter. Among these magnetic force sorters, it is preferable to use a drum-shaped magnetic sorter and a suspended magnetic sorter in the present invention. The magnetic force sorting step may be a dry process or a wet process.

A magnetically attractable material represents a material that can be attracted to a magnetic force source by an attractive force generated between the material and the magnetic force source by a magnetic force generated by the magnetic force source configured to generate a magnetic force (a magnetic field) (for example, a magnet and an electromagnet). Examples of the magnetically attractable material include ferromagnetic metals. Examples of ferromagnetic metals include iron, nickel, and cobalt.

A non-magnetically attractable material represents a material that is not attracted to the magnetic force source by a magnetic force generated by the magnetic force source. The non-magnetically attractable material is not particularly limited and may be appropriately selected in accordance with the intended purpose. Examples of non-magnetically attractable metal materials include paramagnetic or diamagnetic metals. Examples of paramagnetic or diamagnetic metals include aluminum, manganese, gold, silver, and copper.

When separating iron from the coarse-grained product as a magnetically attractable material, the magnitude of the magnetic force for the magnetic force sorting is preferably, for example, a magnetic flux density of 0.01 T (100 G) or higher. "T" stands for tesla, and "G" stands for gauss.

When sorting stainless steel from the coarse-rained product, a magnetic force higher than the range specified above may be used. Different magnetic forces may be combined and used in multiple stages.

When not performing the magnetic force sorting step, iron contained in the coarse-grained product can be separated into the heavy product in the wet sorting step. However, when iron is subjected to a wet process, iron may be rusted. In this case, it is difficult to recover transaction-grade iron. Therefore, it is preferable to perform the magnetic sorting step before the wet sorting step.

### <Wet sorting step>

Next, the wet sorting step (wet specific gravity sorting step) of applying an external force to the thermally treated product obtained in the thermal treatment step, or preferably the coarse-grained product obtained at the coarse side in the classifying step, or more preferably the non-magnetically attractable materials recovered subsequently in the magnetic sorting step (i.e., the coarse-grained product from which magnetically attractable materials are removed; non-magnetically attractable materials) in the presence of a liquid to sort the product or the materials into a heavy product and a light product mainly containing copper is performed. That is, in the wet sorting step, vibration can be applied to the thermally treated product or the coarse-grained product in a liquid.

By applying an external force to the thermally treated product, the coarse-grained product, or the non-magnetically attractable materials in the presence of a liquid, it is possible to apply vibration and friction to the thermally treated product, the coarse-grained product, or the non-magnetically attractable materials in the liquid. By mutual friction of particles of copper (or a copper alloy) derived from the negative electrode current collector to which carbon particles have adhered, or by friction of the particles of copper (or a copper alloy) with other components or with the internal wall of the device that is configured to apply the friction, the carbon particles are peeled from the negative electrode current collector and separated into the liquid (i.e., the copper particles exist in the shaking liquid in which, for example, copper has subsided). Copper (or the copper alloy) has maintained the foil shape to some degree even through, for example, the pulverizing step, and has a low apparent specific gravity under a strong resistance of water during the subsidence in the liquid. On the other hand, aluminum and iron derived from the exterior case have lump shapes and have a high apparent specific gravity. Based on these factors, through the wet sorting step (wet specific gravity sorting step), foil-shaped copper (or copper alloy) derived from the negative electrode current collector and constituting the coarse-grained product is recovered as the light product, and aluminum derived from the exterior case (and having failed to be separated and recovered as a melted product in the thermal treatment) and iron (having failed to be recovered in the magnetic sorting step, containing stainless steel) are recovered as the heavy product. Since the light product has, for example, a copper brown color, it can also be distinguished from the heavy product by color.

In the present invention, variation in the apparent specific gravity in the liquid (i.e., variation in whether a substance behaves as a light substance or a heavy substance in terms of the magnitude of the resistance it receives in the liquid depending on its shape) is utilized, and for example, a sorted product of a component having a low apparent specific gravity in the liquid is referred to as the "light product", and a sorted product of a component having a high apparent specific gravity in the liquid is referred to as the "heavy product". For example, in the liquid, the heavy product is sorted at the lower side in the gravity direction, and the light product is sorted at the upper side in the gravity direction.

As described above, it is possible to peel carbon from the negative electrode current collector and separate carbon into the shaking liquid through, for example, a net-shaped object described below. Aluminum derived from the positive electrode current collector (this aluminum is considered to exist as aluminum oxide) is finely grained by the friction, and can also be separated into the shaking liquid.

Moreover, because the specific gravity sorting is a wet process, it is possible to reduce adsorption between carbon and other components due to adherent moisture or due to an electrostatic force. Hence, the wet process can facilitate carbon separation better than a dry process. Fluorine and lithium contained in, for example, copper get leached during the wet sorting, and can be separated into the shaking liquid at the same time as carbon separation.

As can be seen, in the wet sorting step, it is possible to suitably sort among the heavy product, the light product, and substances intended to be sorted into the shaking liquid into the shaking liquid by utilizing the friction between different parts of the coarse-grained product, or between the coarse-grained product and the device. In terms of increasing the sorting efficiency, the vibration applied to the coarse-grained products in the wet sorting step is preferably in the vertically upward-downward direction (approximately gravity direction).

The wet sorting step is not particularly limited and may be appropriately selected in accordance with the intended purpose so long as it is possible to apply an external force to the thermally treated product, the coarse-grained product, or the non-magnetically attractable materials in the presence of a liquid and to sort them into a heavy product and a light product containing copper. In the following description, the thermally treated product, the coarse-grained product, and the non-magnetically attractable materials may be referred to as "for example, the coarse-grained product" without differently naming them.

The method for placing, for example, the coarse-grained product in the presence of a liquid when applying an external force to, for example, the coarse-grained product in the presence of a liquid in the wet sorting step is not particularly limited and may be appropriately selected in accordance with the intended purpose so long as the method can make a liquid present around, for example, the coarse-grained product.

Examples of the method for placing, for example, the coarse-grained product in the presence of a liquid include a method of blowing, for example, the coarse-grained product with a liquid by, for example, spraying, a method of pouring a liquid over, for example, the coarse-grained product by, for example showering (i.e., running a liquid through, for example, the coarse-grained product), and a method of immersing, for example, the coarse-grained product in a liquid (i.e., adding, for example, the coarse-grained product to a liquid). Among these methods, the method of immersing, for example, the coarse-grained product in a liquid (i.e., adding, for example, the coarse-grained product to a liquid) is preferable as the method for placing, for example, the coarse-grained product in the presence of a liquid because it is easy to make a sufficient amount of a liquid present around, for example, the coarse-grained product.

In the method for immersing, for example, the coarse-grained product in a liquid (i.e., adding, for example, the coarse-grained product to a liquid), for example, the coarse-grained product may be immersed in, for example, a stationary liquid (immobile liquid) or a flowing liquid (e.g., running water).

The liquid used in the wet sorting step is not particularly limited and may be appropriately selected in accordance with the intended purpose. Examples of the liquid include water. The water used in the wet sorting step is not particularly limited and may be appropriately selected in accordance with the intended purpose. Examples of the water include pure water, tap water, ion-exchanged water, ultrafiltrated water, reverse osmotic water, industrial water, river water, marine water, well water, mineral water, hot spring water, spring, fresh water, purified water, and hot water. One of these kinds of water may be used alone or two or more of these kinds of water may be used in combination. It is preferable to use water as the liquid in terms of costs and environmental impacts, and for example, a dispersant may be added to the water.

The method for applying an external force to, for example, the coarse-grained product when applying an external force to, for example, the coarse-grained product in the presence of a liquid in the wet sorting step is not particularly limited and may be appropriately selected in accordance with the intended purpose so long as the method can cause sorting into a heavy product and a light product mainly containing copper by the applied external force.

Examples of the method for applying an external force to, for example, the coarse-grained product include a method of applying vibration to, for example, the coarse-grained product, a method of supplying a water flow pulsating upward and downward to, for example, the coarse-grained product (i.e., applying vibration to the liquid), and a method of applying a continuous impact to, for example, the coarse-grained product by, for example, beating, for example, the coarse-grained product. In the present invention, among these methods, the method of applying vibration to, for example, the coarse-grained product or the method of supplying a water flow pulsating upward and downward to, for example, the coarse-grained product is preferable as the method for applying an external force to, for example, the coarse-grained product because it becomes easy to sort, for example, the coarse-grained product.

As described above, in the present invention, when applying an external force to, for example, the coarse-grained product in the presence of a liquid in the wet sorting step, it is preferable to apply vibration to, for example, the coarse-grained product or supply a pulsating water flow to, for example, the coarse-grained product while immersing, for example, the coarse-grained product in the liquid.

The method for applying vibration to, for example, the coarse-grained product while immersing, for example, the coarse-grained product in the liquid is not particularly limited and may be appropriately selected in accordance with the intended purpose. A method of placing the coarse-grained product on a net-shaped object and vibrating the net-shaped object in the liquid is preferable. In other words, in the present invention, it is preferable to sort the coarse-grained product into a light product and a heavy product in the wet sorting step by placing the coarse-grained product on a net-shaped object and vibrating the net-shaped object in the liquid. This makes it possible to better improve the grade of copper as a light product.

The method for supplying a pulsating water flow to the coarse-grained product while immersing the coarse-grained product in the liquid is not particularly limited and may be appropriately selected in accordance with the intended purpose. A method of placing the coarse-grained product on a fixed net-shaped object, forming a pulsating water flow by applying a pressure to the liquid mechanically or using compressed air, and dispersing the coarse-grained product by means of the pulsating water flow is preferable. This makes it possible to better improve the grade of copper as a light product.

The device used in the wet sorting step is not particularly limited and may be appropriately selected in accordance with the intended purpose so long as the device can sort the thermally treated product, the coarse-grained product, or the non-magnetically attractable materials (for example, the coarse-grained product) by a wet process by applying vibration while they are in a dispersed state. For example, a jig sorter, a wet rocking table sorter, a double-deck specific gravity sorter, a centrifugal specific gravity sorter, and a flowing-film concentrator can be used. Among these devices, a jig sorter is preferable because it is a simple device and can apply vibration in the gravity direction to, for example, the coarse-grained product easily by shaking. It is preferable that at least a part of the device be formed of a transparent material because it is easy to watch how sorting is going.

It is preferable that the device includes a net-shaped object on which, for example, the coarse-grained product can be placed and at least a part of which has a structure through which a liquid can circulate. The mesh size of the net-shaped object is not particularly limited so long as the mesh size is a size through which a liquid can circulate and a valuable substance (e.g., copper) that is contained in, for example, the coarse-grained product and is the target to be sorted cannot pass. More specifically, the mesh size of the net-shaped object is preferably 0.1 mm or greater and 50 mm or less and more preferably 0.2 mm or greater and 20 mm or less.

The vibration direction when vibrating the net-shaped object in the liquid or the pulsating direction of a water flow when supplying a pulsating water flow to the coarse-grained product is not particularly limited so long as sorting into a heavy product and a light product mainly containing copper is possible. The vertical direction (an approximately gravity direction) is preferable. In other words, in the present invention, it is preferable to vibrate the net-shaped object in an approximately gravity direction or to supply a water flow pulsating in an approximately gravity direction to the coarse-grained product in the wet sorting step. In the present invention, this makes it possible to sort, for example, the coarse-grained product into a light product and a heavy product more efficiently in a short time by utilizing the shape and specific gravity of each substance contained in, for example, the coarse-grained product.

The speed of the vibration applied to, for example, the coarse-grained product in the wet sorting step (or of vibration of a vibrating portion of the device used in the step), or of the pulsation of the water flow is preferably a vibration speed of from 1 mm/s (travel of 1 mm per second) through 1,000 mm/s. The time needed for the vibration to make one go-and-return is preferably from 0.1 seconds through 5 seconds. When the vibration speed or the pulsating speed is lower than 1 mm/s or when the time needed for the vibration to make one go-and-return is longer than 5 seconds, copper, iron, and aluminum that are mainly contained in the processing-target coarse-grained product tend to be separated insufficiently. When the vibration speed is higher than 1,000 mm/s or when the time needed for one go-and-return is shorter than 0.1 seconds, the vibration is so strong that the substances tend to be mixed rather than separated. From these points of view, the vibration speed is more preferably from 30 mm/s through 500 mm/s, and the time needed for one go-and-return is more preferably from 1 second through 4 seconds.

The width of fluctuation of the net-shaped object (width of fluctuation: the distance by which the sorter travels during a go or a return) or the width by which the water surface is pulsated under the pulsating water flow is not particularly limited so long as, for example, the coarse-grained product can be sorted into a heavy product and a light product mainly containing copper, and is preferably, for example, 1 mm or greater and 2,000 mm or less and more preferably 10 mm or greater and 1,000 mm or less.

In addition, the time for which the vibration is applied to the net-shaped object or the liquid and the frequency of vibration (which is the same as the frequency of pulsation for a liquid) are not particularly limited so long as, for example, the coarse-grained product can be sorted into a heavy product and a light product mainly containing copper. For example, when shaking is applied upward and downward three hundred times (300 go-and-returns) at a vibration speed of 50 mm/s at a width of fluctuation of 50 mm, the time for which the vibration is applied is 10 minutes.

The method for applying vibration to the net-shaped object is not particularly limited. For example, it is possible to employ a method of a human operator holding the sorting device including the net-shaped object by hand and making the sorting device go and return in an approximately gravity direction (upward and downward direction). Or, automatically, a device including, for example, a motor may be used to make the sorting device go and return in an approximately gravity direction (upward and downward direction). The method for applying vibration to the liquid is not particularly limited. For example, it is possible to employ a method of moving the water level upward or downward using compressed air.

In the wet sorting step, it is optional to separate, for example, the coarse-grained product into three or more decks for, for example, a light product, a medium specific gravity product, and a heavy product. A lithium ion secondary battery contains copper not only as the foil-shaped copper of the negative electrode current collector, but may contain trace copper as thick copper components such as a copper wire and a copper plate. These copper components have an apparent specific gravity higher than that of aluminum. Hence, in this case, the foil-shaped copper can be collected into the light product, the other copper components can be collected into the heavy product, and aluminum can be collected into the medium specific gravity product.

In the present invention, the heavy product recovered by two-deck separation into the heavy product and the light product may be subjected to specific gravity sorting again. This heavy product contains not only aluminum but also the mentioned trace copper components contained in the lithium ion secondary battery. It is possible to separate aluminum into a light product to be obtained by subjecting the heavy product to specific gravity sorting, and to recover the copper components into a heavy product to be obtained by subjecting the heavy product to specific gravity sorting. This specific gravity sorting may be dry specific gravity separation.

In the wet sorting step, there may be a case where a part of the foil-shaped copper to which carbon has adhered floats in the liquid. This copper part may be recovered as a light product, or may be recovered as a product of copper from which carbon has not been peeled sufficiently so it may be subjected to the pulverizing step again.

As described above, in the wet sorting step of the present invention, high-grade copper can be obtained as the light product from the coarse-grained product. Specifically, the sorted light product mainly containing copper has a copper grade of 90% or higher, a carbon grade of 5% or lower, and a fluorine grade of 0.2% or lower. It is preferable that the light product has an aluminum grade of 1% or lower, and a lithium grade of 0.2% or lower.

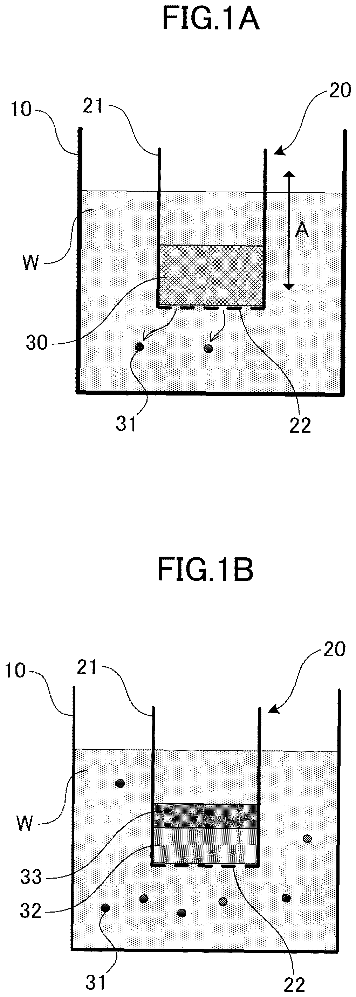

FIG. 1A is a concept diagram illustrating an example of a state when non-magnetically attractable materials are sorted in a liquid using a sorting unit in the wet sorting step.

In the example illustrated in FIG. 1A, water W is stored in a liquid storing container 10. In the example illustrated in FIG. 1A, non-magnetically attractable materials 30 are stored in a sorting unit 20 including a storage 21. A sieving unit (net-shaped object) 22 is installed at the bottom of the storage 21 of the sorting unit 20. The water W is flowing into the storage 21 of the sorting unit 20 through the sieving unit 22. The water W is present inside the storage 21, and the non-magnetically attractable materials 30 are present in the water W.

In the wet sorting step, for example, vibrating the sorting unit 20 in the direction indicated by the arrow A of FIG. 1A (an approximately gravity direction) effects sorting. That is, in the example illustrated in FIG. 1A, vibrating the sorting unit 20 in the water W causes application of an external force to the non-magnetically attractable materials 30 and vibrates the non-magnetically attractable materials 30, to thereby effect sorting of the non-magnetically attractable materials 30. Moreover, as illustrated in FIG. 1A, vibrating the sorting unit 20 in the water W can inhibit carbon 31 adhering to the valuable substances such as copper contained in the non-magnetically attractable materials 30 from adsorbing to the valuable substances due to adherent moisture or due to an electrostatic force, to effect separation of the carbon 31, which is separated into the water W through the sieving unit 22.

When vibrating the sorting unit 20 in the water W, it is preferable to vibrate the sorting unit 20 in a manner that the opening (upper side) of the storage 21 does not come to a level lower than the water surface of the water W. In this way, it is possible to avoid any floating substances that occur in the storage 21 leaking outside the storage 21.

FIG. 1B is a concept diagram illustrating an example of a state after the non-magnetically attractable materials are sorted in the liquid using the sorting unit in the wet sorting step.

FIG. 1B illustrates an example of a state when the sorting unit 20 is sufficiently vibrated in the example illustrated in FIG. 1A, to sort the non-magnetically attractable materials 30 into a heavy product 32 and a light product 33. As illustrated in FIG. 1B, by vibrating the sorting unit 20 in the water W in an approximately gravity direction, it is possible to efficiently sort the non-magnetically attractable materials 30 into the heavy product 32 and the light product 33 utilizing the shape and specific gravity of each substance contained in the non-magnetically attractable materials 30.

In FIG. 1B, when the non-magnetically attractable materials 30 are vibrated by application of an external force, different parts of the non-magnetically attractable materials 30 are rubbed against each other to cause friction. Therefore, the carbon 31 is peeled off, breaks into fine particles, and can be separated into the water W, and fluorine contained in the non-magnetically attractable materials 30 can also be separated into the water W because fluorine leaches into the water W.

The present invention is not limited to use of the sorting unit as illustrated in FIG. 1A and FIG. 1B. For example, the liquid storing container 10 need not be used, and the storage 21 of the sorting unit 20 may be configured to be able to retain the water W itself (i.e., the sieving unit 22 need not be provided, and the bottom of the storage 21 may be tightly closed), so vibrating the sorting unit 20 while the storage 21 is filled with the water W can effect vibration of the non-magnetically attractable materials 30 in the water W and sorting into the heavy product 32 and the light product 33.

### <Other steps>

The other steps are not particularly limited and may be appropriately selected in accordance with the intended purpose. Examples of the other steps include a recovering step.

### <<Recovering step>>

For example, the recovering step may be a step of separately recovering the heavy product and the light product mainly containing copper that are sorted in the wet sorting step.

In the recovering step, for example, after the sorting unit is taken out from the liquid and drained of the liquid, it is possible to recover a product collected by a predetermined thickness from the thermally treated product, the coarse-grained product, or the non-magnetically attractable materials (for example, the coarse-grained product) from above as the light product, and the rest as the heavy product. Examples of the method for collecting, for example, the coarse-grained product by a predetermined thickness from above include a collecting method using a medicine spoon, and a collecting method by insertion of a flat plate-shaped component between the light product and the heavy product for separation between the light product and the heavy product.

Moreover, because the light product into which copper is concentrated has a copper brown color, it is possible to distinguish the heavy product and the light product from each other by regarding the part having the copper brown color as the light product and the other part as the heavy product.

### <Example embodiment>

Here, an example embodiment of the sorting method for a lithium ion secondary battery of the present invention will be described. FIG. 2 is a chart indicating an example of the flow of one embodiment of the method for recovering a valuable substance of the present invention.

As illustrated in FIG. 2, in the present embodiment, first, a lithium ion secondary battery is placed on a receptacle into which to recover aluminum derived from the housing, and thermally treated at a thermal treatment temperature of 660°C or higher and 1,100°C or lower (thermal treatment step). In the thermal treatment step, aluminum derived from the housing of the lithium ion secondary battery is melted and recovered into the receptacle as a melted product.

Next, the thermally treated product of the lithium ion secondary battery is pulverized, to obtain a pulverized product (pulverizing step).

Next, the pulverized product is classified at a classification point of 1.2 mm or greater and 2.4 mm or less, to classify the pulverized product into a coarse-grained product (oversize product) and a fine-grained product (undersize product) (classifying step). Here, for example, copper (Cu), aluminum (Al), iron (Fe), carbon (C), and fluorine (F) are contained in the coarse-grained product (oversize product). On the other hand, for example, cobalt (Co), nickel (Ni), carbon (C), and aluminum (Al) are contained in the fine-grained product (undersize product).

Next, the coarse-grained product is subjected to sorting by a magnetic force (magnetic sorting), to sort the coarse-grained product into magnetically attractable materials and non-magnetically attractable materials (magnetic force sorting step). Here, iron (Fe) is sorted and concentrated in the magnetically attractable materials, and, for example, copper (Cu), aluminum (Al), carbon (C), and fluorine (F) are contained in the non-magnetically attractable materials.

Then, the non-magnetically attractable materials are subjected to sorting by application of an external force in the presence of a liquid, to thereby sort the non-magnetically attractable materials into a light product and a heavy product (wet sorting step). More specifically, in the present embodiment, in the wet sorting step, for example, the coarse-grained product is stored in a sorting unit including a storage configured to store the non-magnetically attractable materials, and the sorting unit is vibrated in the liquid in an approximately gravity direction, to thereby separate each substance in the non-magnetically attractable materials into the heavy product, the light product, or the shaking liquid.

In the present embodiment, aluminum (Al) is concentrated in the heavy product, copper (Cu) is concentrated in the light product, and carbon (C) and fluorine (F) are separated into the shaking liquid (liquid).

In this way, in the present embodiment, it is possible to separate the valuable substance (e.g., copper) contained in the lithium ion secondary battery from fluorine and carbon highly accurately, and to sort the valuable substance at a high grade.

### Examples

The present invention will be described below by way of Examples. The present invention should not be construed as being limited to these Examples.

### (Example 1)

### <Thermal treatment>

A lithium ion secondary battery pack (300 kg) for vehicles, of which an exterior case (housing) was formed of aluminum (with some parts of the exterior case containing iron) (in the lithium ion secondary battery, the positive electrode current collector was an aluminum foil, the negative electrode current collector was a copper foil, the negative electrode active substance was a carbon material, and fluorine was contained in the electrolytic solution) was subjected to the thermal treatment step, the pulverizing step, the classifying step, the magnetic sorting step, and the wet sorting step as indicated by the flow of FIG. 2, to recover a valuable substance. Specific processes were as follows.

Using a fixed bed furnace (having a diameter of 4,300 mm and a height of 6,500 mm) having a cylindrical internal shape as a thermal treatment device, the lithium ion secondary battery pack was thermally treated at a thermal treatment temperature of 800°C (subjected to temperature elevation from room temperature to 800°C in 15 minutes, and then temperature retention for 2 hours) in the atmospheric atmosphere. In the thermal treatment, the lithium ion secondary battery pack for vehicles was placed on a receptacle into which to recover aluminum derived from the housing, and aluminum derived from the housing was melted and recovered into the receptacle as a melted product.

### <Pulverization and classification>

Next, in the pulverizing step, using a chain mill (CROSSFLOW SHREDDER S-1000, obtained from Sato Tekko Co., Ltd.) as a pulverizer, the thermally treated product of the lithium ion secondary battery pack for vehicles was pulverized at a chain rotation number of 30 Hz for a pulverization time of 30 seconds, to obtain a pulverized product.

Next, in the classifying step, using a vibrating sieve having a sieve mesh size of 1.2 mm (model No. STZF-90-210TB, obtained from Daito Vibration Engineering Co., Ltd.), the pulverized product of the lithium ion secondary battery pack for vehicles was sieved (classified). After sieving, the oversize product (coarse-grained product) and the undersize product (fine-grained product) above and below the 1.2 mm sieve were collected, respectively.

### <Magnetic force sorting>

Next, using a suspended magnetic sorter (SP-610 SC-2 SPCL-L, obtained from Eriez Magnetics Japan Co., Ltd.) having a magnetic flux density of 500 G (0.05 T), iron in the obtained coarse-grained product was removed into magnetically attractable materials, to thereby separate magnetically attractable materials and non-magnetically attractable materials from each other.

### <Wet sorting>

Next, the obtained non-magnetically attractable materials were subjected to the wet sorting step.

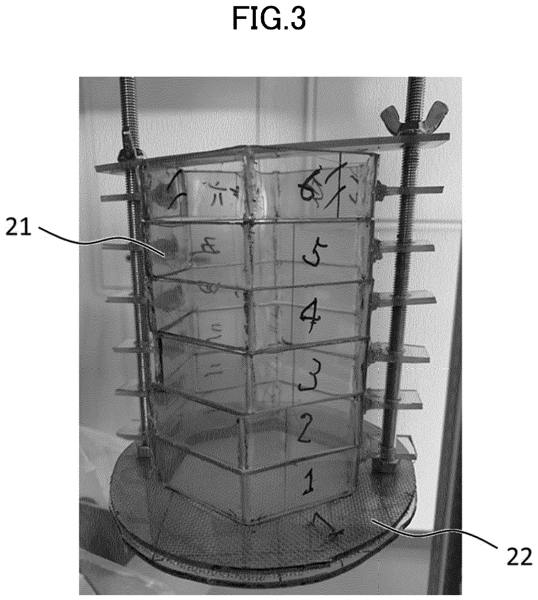

First, a jig sorter (FIG. 3): having a storied structure (with a total height of 150 mm) of six enclosures each having a regular-hexagonal cross-sectional shape, a diagonal length of 110 mm along a line passing the center of the regular hexagonal shape, and a height of 25 mm; and including a sieve having a mesh size of 600 µm at the bottom surface was installed in a 15 L bucket. Then, the non-magnetically attractable materials (135 g) were put into the jig sorter. Here, while the jig sorter was lifted upward by 100 mm from the bottom of the bucket, water (13 L) serving as a shaking liquid was added until the water surface reached the boundary line between the fourth story and the fifth story. As a result, the jig sorter got filled with the non-magnetically attractable materials to a height above the third story.

As illustrated in FIG. 3, the side surfaces (storages 21) of the wet jig sorter used in Example 1 were formed of a transparent material, and it was possible to watch the internal state from the outside by visual observation.

Next, the wet jig sorter was shaken (vibrated) upward and downward (in the gravity direction) three hundred times at a speed of 50 mm/s at a width of fluctuation of 50 mm (the time needed for one upward-and-downward move (one go-and-return) was about 2 seconds). During shaking, care was taken so that the water surface would go to and return from between about the boundary line between the fourth story and the fifth story and below the top surface of the sixth story and the shaking liquid would not overflow from the top of the jig sorter.

After shaking, any floating substances on the water surface were scooped and removed, and then the jig sorter was taken out from the bucket. The top 25-mm width of the non-magnetically attractable materials on the sieve was confirmed to have a copper brown color by visual observation. Hence, it was recovered with a medicine spoon as a copper concentrate (light product), and its grade was evaluated.

The product discharged together with the water through the sieve at the bottom of the wet jig sorter during shaking (vibration) (i.e., the product that passed through the 600-µm meshes at the bottom) was recovered as the shaking liquid.

### <Evaluation>

The grade of the light product was evaluated in the manner described below. The weight of the light product was measured with an electromagnetic balance (product name: GX-8K, obtained from A&D Company, Limited). Subsequently, the light product was heated and dissolved in aqua regia (obtained from FUJIFILM Wako Pure Chemical Corporation), and analyzed by an inductively coupled high-frequency plasma emission spectrometer (ICAP6300, obtained from Thermo Fisher Scientific K.K.), to obtain the content percentage (grade) of each element. The grade in the non-magnetically attractable materials (feed) was evaluated in the same manner. The results are presented in Table 1.

### (Comparative Example 1)

A valuable substance was recovered from a lithium ion secondary battery pack in the same manner as in Example 1 except that an air table (dry specific gravity sorting) was applied to the non-magnetically attractable materials instead of jig sorting (wet sorting), to recover a copper concentrate as a light product. The grade of the obtained light product was evaluated in the same manner as in Example 1.

The results of the above test are presented in Table 1.

**Table 1**

| Grade (%) | Cu | Al | Fe | Co | Ni | Mn | Li | C | F |
|---|---|---|---|---|---|---|---|---|---|
| Non-magnetically attractable materials (feed) | 67.6 | 17.7 | 0.0 | 1.0 | 1.6 | 1.1 | 1.2 | 7.7 | 1.6 |
| Light product of Ex. 1 | 95.5 | 0.4 | 0.0 | 0.0 | 0.1 | 0.1 | 0.1 | 3.2 | 0.0 |
| Light product of Comp. Ex. 1 | 68.2 | 8.0 | 0.0 | 2.8 | 4.0 | 3.2 | 1.7 | 10.6 | 1.5 |

As presented in Table 1, the copper grade in the light product of Example 1 could be improved to about 96% from the copper (Cu) grade of about 68% in the non-magnetically attractable materials (feed).

As regards aluminum (Al), the aluminum grade in the light product was reduced to 0.4% from the aluminum grade of 17.7% in the non-magnetically attractable materials (feed). Judging from this, it is considered that lump-shaped Al derived from the exterior case could be separated as the heavy product, and aluminum derived from the embrittled and finely grained positive electrode current collector Al foil was finely grained by vibration during the wet sorting and by contact with other components and could be separated into the shaking liquid.

Moreover, parts of cobalt (Co), nickel (Ni), and manganese (Mn) that failed to be removed through the classification and the magnetic force sorting were contained in the non-magnetically attractable materials (feed) by from 1.0% through 1.6%, whereas the Co, Ni, and Mn grades in the light product of Example 1 could all be reduced to 0.2% or lower.

In addition, in Example 1, lithium (Li) and fluorine (F) could be leached and separated into the shaking liquid by the wet sorting. Therefore, a Li grade of 0.2% or lower and a F grade of 0.2% or lower could be obtained.

Moreover, as regards carbon (C), the C grade in the light product of Example 1 could be reduced to 3.2% from the carbon grade of 7.7% in the non-magnetically attractable materials (feed). This is considered attributable to having separated carbon into the supernatant liquid.

On the other hand, in Comparative Example 1, the fine grains of aluminum oxide mentioned above were recovered into the light product. Co, Ni, Mn, and carbon were also concentrated in the light product.

Moreover, lithium and fluorine could not be removed from the light product because of the dry specific gravity sorting.

### Reference Signs List

- A:: arrow indicating a vibration direction
- W:: water
- 10:: liquid storing container
- 20:: sorting unit
- 21:: storage
- 22:: sieving unit (net-shaped object)
- 30:: non-magnetically attractable materials
- 31:: carbon
- 32:: heavy product
- 33:: light product

## Claims

1. A method for recovering a valuable substance from a lithium ion secondary battery, the method comprising:
a thermal treatment step of thermally treating a lithium ion secondary battery containing aluminum, carbon, and a copper foil as constituting materials; and
a wet sorting step of applying an external force to a thermally treated product obtained in the thermal treatment step in the presence of a liquid, to sort the thermally treated product into a heavy product and a light product containing copper, **characterized in that**
the light product obtained by sorting in the wet sorting step has a copper grade of 90% or higher, a carbon grade of 5% or lower, and a fluorine grade of 0.2% or lower.

2. The method for recovering a valuable substance from a lithium ion secondary battery according to claim 1, further comprising:
a classifying step of classifying the thermally treated product obtained in the thermal treatment step at a classification point of from 0.6 mm through 2.4 mm,
wherein a coarse-grained product thus obtained at a coarse side is subjected to the wet sorting step.

3. The method for recovering a valuable substance from a lithium ion secondary battery according to claim 1 or 2,
wherein in the wet sorting step, the thermally treated product or the coarse-grained product is placed on a net-shaped object, and vibration is applied to the net-shaped object or the liquid, to sort materials constituting the thermally treated product or the coarse-grained product into the heavy product and the light product containing copper.

4. The method for recovering a valuable substance from a lithium ion secondary battery according to claim 3,
wherein in the wet sorting step, the vibration applied to the net-shaped object or the liquid is in a vertical direction.

5. The method for recovering a valuable substance from a lithium ion secondary battery according to claim 3 or 4,
wherein in the wet sorting step, a vibration speed at which the vibration is applied to the net-shaped object or the liquid is from 1 mm/s through 1,000 mm/s, and a time needed for the vibration to make one go-and-return is from 0.1 seconds through 5 seconds.

6. The method for recovering a valuable substance from a lithium ion secondary battery according to any one of claim 3 to 5,
wherein a mesh size of the net-shaped object is from 0.1 mm through 50 mm.

7. The method for recovering a valuable substance from a lithium ion secondary battery according to any one of claim 1 to 6,
wherein the lithium ion secondary battery contains fluorine.

8. The method for recovering a valuable substance from a lithium ion secondary battery according to any one of claims 1 to 7,
wherein the light product obtained by sorting in the wet sorting step has an aluminum grade of 1% or lower.

9. The method for recovering a valuable substance from a lithium ion secondary battery according to any one of claims 2 to 8, further comprising:
a pulverizing step of pulverizing the thermally treated product obtained in the thermal treatment step,
wherein a pulverized product thus obtained is subjected to the classifying step.

10. The method for recovering a valuable substance from a lithium ion secondary battery according to any one of claims 2 to 9, further comprising:
a magnetic force sorting step of sorting the thermally treated product obtained in the thermal treatment step or the coarse-grained product obtained at the coarse side in the classifying step by a magnetic force,
wherein the coarse-grained product from which a magnetically attractable material is removed is subjected to the wet sorting step.

11. The method for recovering a valuable substance from a lithium ion secondary battery according to any one of claims 1 to 10,
wherein a thermal treatment temperature in the thermal treatment step is 660°C or higher and 1,100°C or lower.

12. The method for recovering a valuable substance from a lithium ion secondary battery according to any one of claims 1 to 11,
wherein the wet sorting step is performed using a jig sorter.

## Patentansprüche

1. Verfahren zum Rückgewinnen einer wertvollen Substanz aus einer Lithium-Ionen-Sekundärbatterie, wobei das Verfahren umfasst:
einen Wärmebehandlungsschritt des Wärmebehandelns einer Lithium-Ionen-Sekundärbatterie, die Aluminium, Kohlenstoff und eine Kupferfolie als Bestandteile enthält; und
einen Nasssortierungsschritt des Anwendens einer äußeren Kraft auf ein wärmebehandeltes Produkt, erhalten in dem Wärmebehandlungsschritt, in der Anwesenheit einer Flüssigkeit, um das wärmebehandelte Produkt in ein schweres Produkt und ein leichtes Produkt, das Kupfer enthält, zu sortieren, **dadurch gekennzeichnet, dass**
das leichte Produkt, erhalten durch das Sortieren in dem Nasssortierungsschritt, einen Kupfergehalt von 90% oder höher, einen Kohlenstoffgehalt von 5% oder niedriger und einen Fluorgehalt von 0,2% oder niedriger aufweist.

2. Verfahren zum Rückgewinnen einer wertvollen Substanz aus einer Lithium-Ionen-Sekundärbatterie nach Anspruch 1, weiter umfassend:
einen Klassifizierungsschritt des Klassifizierens des wärmebehandelten Produkts, erhalten in dem Wärmebehandlungsschritt, an einem Klassifizierungspunkt von 0,6 mm bis 2,4 mm,
wobei ein grobkörniges Produkt, das so auf einer groben Seite erhalten wird, dem Nasssortierungsschritt unterzogen wird.

3. Verfahren zum Rückgewinnen einer wertvollen Substanz aus einer Lithium-Ionen-Sekundärbatterie nach Anspruch 1 oder 2,
wobei in dem Nasssortierungsschritt das wärmebehandelte Produkt oder das grobkörnige Produkt auf ein netzförmiges Objekt gelegt wird und Vibration auf das netzförmige Objekt oder die Flüssigkeit angewendet wird, um Materialien, die das wärmebehandelte Produkt oder das grobkörnige Produkt konstituieren, in das schwere Produkt und das leichte Produkt, das Kupfer enthält, zu sortieren.

4. Verfahren zum Rückgewinnen einer wertvollen Substanz aus einer Lithium-Ionen-Sekundärbatterie nach Anspruch 3,
wobei in dem Nasssortierungsschritt die Vibration, die auf das netzförmige Objekt oder die Flüssigkeit angewendet wird, in einer vertikalen Richtung erfolgt.

5. Verfahren zum Rückgewinnen einer wertvollen Substanz aus einer Lithium-Ionen-Sekundärbatterie nach Anspruch 3 oder 4,
wobei in dem Nasssortierungsschritt eine Vibrationsgeschwindigkeit, mit welcher die Vibration auf das netzförmige Objekt oder die Flüssigkeit angewendet wird, von 1 mm/s bis 1000 mm/s beträgt, und eine Zeit, die benötigt wird, damit die Vibration eine Hin- und Rückbewegung ausführt, von 0,1 Sekunden bis 5 Sekunden beträgt.

6. Verfahren zum Rückgewinnen einer wertvollen Substanz aus einer Lithium-Ionen-Sekundärbatterie nach einem der Ansprüche 3 bis 5,
wobei eine Maschengröße des netzförmigen Objekts von 0,1 mm bis 50 mm beträgt.

7. Verfahren zum Rückgewinnen einer wertvollen Substanz aus einer Lithium-Ionen-Sekundärbatterie nach einem der Ansprüche 1 bis 6,
wobei die Lithium-Ionen-Sekundärbatterie Fluor enthält.

8. Verfahren zum Rückgewinnen einer wertvollen Substanz aus einer Lithium-Ionen-Sekundärbatterie nach einem der Ansprüche 1 bis 7,
wobei das leichte Produkt, erhalten durch das Sortieren in dem Nasssortierungsschritt, einen Aluminiumgehalt von 1% oder niedriger aufweist.

9. Verfahren zum Rückgewinnen einer wertvollen Substanz aus einer Lithium-Ionen-Sekundärbatterie nach einem der Ansprüche 2 bis 8, weiter umfassend:
einen Pulverisierungsschritt des Pulverisierens des wärmebehandelten Produkts, erhalten in dem Wärmebehandlungsschritt,
wobei ein pulverisiertes Produkt, das so erhalten wird, dem Klassifizierungsschritt unterzogen wird.

10. Verfahren zum Rückgewinnen einer wertvollen Substanz aus einer Lithium-Ionen-Sekundärbatterie nach einem der Ansprüche 2 bis 9, weiter umfassend:
einen Magnetkraftsortierungsschritt des Sortierens des wärmebehandelten Produkts, erhalten in dem Wärmebehandlungsschritt, oder des grobkörnigen Produkts, erhalten auf der groben Seite in dem Klassifizierungsschritt durch eine magnetische Kraft,
wobei das grobkörnige Produkt, aus welchem ein magnetisch anziehbares Material entfernt ist, dem Nasssortierungsschritt unterzogen wird.

11. Verfahren zum Rückgewinnen einer wertvollen Substanz aus einer Lithium-Ionen-Sekundärbatterie nach einem der Ansprüche 1 bis 10,
wobei eine Wärmebehandlungstemperatur in dem Wärmebehandlungsschritt 660 °C oder höher und 1100 °C oder niedriger beträgt.

12. Verfahren zum Rückgewinnen einer wertvollen Substanz aus einer Lithium-Ionen-Sekundärbatterie nach einem der Ansprüche 1 bis 11,
wobei der Nasssortierungsschritt unter Verwendung eines Jig-Sortierers durchgeführt wird.

## Revendications

1. Procédé de récupération d'une substance de valeur d'une batterie rechargeable lithium ion, le procédé comprenant :
une étape de traitement thermique consistant à traiter thermiquement une batterie rechargeable lithium ion contenant de l'aluminium, du carbone et une feuille de cuivre comme matériaux constitutifs ; et
une étape de tri humide consistant à appliquer une force externe à un produit traité thermiquement obtenu dans l'étape de traitement thermique en présence d'un liquide, pour trier le produit traité thermiquement en un produit lourd et un produit léger contenant du cuivre, **caractérisé en ce que**
le produit léger obtenu par tri dans l'étape de tri humide a un titre de cuivre de 90 % ou supérieur, un titre de carbone de 5 % ou inférieur et un titre de fluor de 0,2 % ou inférieur.

2. Procédé de récupération d'une substance de valeur d'une batterie rechargeable lithium ion selon la revendication 1, comprenant en outre :
une étape de classification consistant à classifier le produit traité thermiquement obtenu dans l'étape de traitement thermique à un point de classification allant de 0,6 mm à 2,4 mm,
dans lequel un produit à grains grossiers ainsi obtenu sur un côté grossier est soumis à l'étape de tri humide.

3. Procédé de récupération d'une substance de valeur d'une batterie rechargeable lithium ion selon la revendication 1 ou 2,
dans lequel dans l'étape de tri humide, le produit traité thermiquement ou le produit à grains grossiers est placé sur un objet en forme de filet, et une vibration est appliquée à l'objet en forme de filet ou au liquide pour trier des matériaux constituant le produit traité thermiquement ou le produit à grains grossiers en le produit lourd et le produit léger contenant du cuivre.

4. Procédé de récupération d'une substance de valeur d'une batterie rechargeable lithium ion selon la revendication 3,
dans lequel dans l'étape de tri humide, la vibration appliquée à l'objet en forme de filet ou au liquide est dans une direction verticale.

5. Procédé de récupération d'une substance de valeur d'une batterie rechargeable lithium ion selon la revendication 3 ou 4,
dans lequel dans l'étape de tri humide, une vitesse de vibration à laquelle la vibration est appliquée à l'objet en forme de filet ou au liquide va de 1 mm/s à 1000 mm/s et une durée nécessaire pour que la vibration fasse un aller-retour va de 0,1 seconde à 5 secondes.

6. Procédé de récupération d'une substance de valeur d'une batterie rechargeable lithium ion selon l'une quelconque des revendications 3 à 5,
dans lequel une taille de maille de l'objet en forme de filet va de 0,1 mm à 50 mm.

7. Procédé de récupération d'une substance de valeur d'une batterie rechargeable lithium ion selon l'une quelconque des revendications 1 à 6,
dans lequel la batterie rechargeable lithium ion contient du fluor.

8. Procédé de récupération d'une substance de valeur d'une batterie rechargeable lithium ion selon l'une quelconque des revendications 1 à 7,
dans lequel le produit léger obtenu par tri dans l'étape de tri humide a un titre d'aluminium de 1 % ou inférieur.

9. Procédé de récupération d'une substance de valeur d'une batterie rechargeable lithium ion selon l'une quelconque des revendications 2 à 8, comprenant en outre :
une étape de pulvérisation consistant à pulvériser le produit traité thermiquement obtenu dans l'étape de traitement thermique,
dans lequel un produit pulvérisé ainsi obtenu est soumis à l'étape de classification.

10. Procédé de récupération d'une substance de valeur d'une batterie rechargeable lithium ion selon l'une quelconque des revendications 2 à 9, comprenant en outre :
une étape de tri par force magnétique consistant à trier le produit traité thermiquement obtenu dans l'étape de traitement thermique ou le produit à grains grossiers obtenu sur le côté grossier dans l'étape de classification par une force magnétique,
dans lequel le produit à grains grossiers duquel un matériau pouvant être attiré magnétiquement est éliminé est soumis à l'étape de tri humide.

11. Procédé de récupération d'une substance de valeur d'une batterie rechargeable lithium ion selon l'une quelconque des revendications 1 à 10,
dans lequel une température de traitement thermique dans l'étape de traitement thermique est de 660 °C ou supérieure et 1100 °C ou inférieure.

12. Procédé de récupération d'une substance de valeur d'une batterie rechargeable lithium ion selon l'une quelconque des revendications 1 à 11,
dans lequel l'étape de tri humide est réalisée en utilisant un trieur à crible.
